(19) **Europäisches Patentamt**

**European Patent Office**

**Office européen des brevets**

(11) Veröffentlichungsnummer: **0 247 460 B1**

(12) # EUROPÄISCHE PATENTSCHRIFT

(45) Veröffentlichungstag der Patentschrift: **01.07.92**

(21) Anmeldenummer: **87107062.9**

(22) Anmeldetag: **22.05.87**

(51) Int. Cl.⁵: **C04B 35/64**, C04B 33/32, F27B 9/16, F27B 19/02, F27D 3/12

(54) Verfahren zum Brennen von grünen Formteilen aus keramischen Massen.

(30) Priorität: **24.05.86 DE 3617530**

(43) Veröffentlichungstag der Anmeldung:
**02.12.87 Patentblatt 87/49**

(45) Bekanntmachung des Hinweises auf die Patenterteilung:
**01.07.92 Patentblatt 92/27**

(84) Benannte Vertragsstaaten:
**DE FR GB IT**

(56) Entgegenhaltungen:
**EP-A- 0 084 387**
**DE-B- 1 233 313**
**FR-A- 2 075 621**

(73) Patentinhaber: **Hoechst CeramTec Aktiengesellschaft**
**Wilhelmstrasse 14**
**W-8672 Selb(DE)**

(72) Erfinder: **Der Erfinder hat auf seine Nennung verzichtet**

(74) Vertreter: **Beck, Bernhard et al**
**HOECHST AKTIENGESELLSCHAFT Zentrale Patentabteilung Postfach 80 03 20**
**W-6230 Frankturt/Main 80(DE)**

# Beschreibung

Die Erfindung betrifft ein Verfahren zum Brennen von grünen Formteilen aus keramischen Massen, die Plastifizierstoffe enthalten. Sie betrifft ferner eine Vorrichtung zum Brennen der genannten Formteile.

Nach den bekannten Verfahren werden die grünen Formteile aus keramischen Massen auf sogenannten Brennhilfsmitteln, z. B. Brennplatten bei Raumtemperatur abgesetzt, anschließend auf Brenntemperatur erhitzt, auf dieser Brenntemperatur eine gewisse Zeit gehalten und danach auf Raumtemperatur abgekühlt. Die Durchlaufzeit hängt im wesentlichen von der Wärmeschockfestigkeit der Brennhilfsmittel ab. Sie beträgt insbesondere für den Hochtemperaturbrand, z. B. von Aluminiumoxidteilen, bei denen die Brenntemperaturen im Bereich von 1700°C liegen, mehr als 24 Stunden auch dann, wenn es sich um Formteile von weniger als 1 cm$^3$ handelt. Wenn auch für Teile aus silikatkeramischen Werkstoffen oder anderen Werkstoffen die Brenntemperaturen niedriger liegen, so ist bei ihnen die Situation in bezug auf die erreichbaren minimalen Durchlaufzeiten durchaus ähnlich. Der thermische Wirkungsgrad der bekannten Brennvorrichtungen beträgt dadurch weniger als 25%.

Auf Grund reaktionskinetischer Überlegungen sind für das eigentliche Brennen von keramischen Massen nur wenige Minuten erforderlich. Die Schätzwerte liegen zwischen 10 und 20 Minuten. Die über die notwendige Brennzeit hinausgehende Verweildauer der Teile auf hohem Temperaturniveau führt einerseits zu unkontrolliertem und unerwünschtem Kristallwachstum sowie zu Verformungen infolge der Eigengewichtsbelastung. Andererseits führt das Aufheizen von Raum- auf Brenntemperatur und das anschließende Abkühlen auf Raumtemperatur wegen des damit verbundenen Temperaturschocks, sowie die zahlreichen Transportschritte zwischen den Heizzyklen zu einem erheblichen Verschleiß der Brennhilfsmittel. Es ist daher ein großer Vorrat an Brennhilfsmitteln erforderlich, der durchaus mehrere Tausend Brennplatten pro Brennvorrichtung betragen kann. Es ist ferner ein großer Puffer von Teilen nicht nur in, sondern auch vor der Brennvorrichtung erforderlich. Letztendlich ist eine Gesamtdurchlaufzeit von mehr als 24 Stunden eine grundlegende Erschwernis für die Qualitätslenkung, da die Wirkung getroffener Maßnahmen erst nach dieser Zeitspanne überprüft werden kann.

Hier will die Erfindung Abhilfe schaffen. Die Erfindung, wie sie in den Ansprüchen gekennzeichnet ist, löst die Aufgabe dadurch, daß die grünen Formteile auf Brennhilfsmittel gesetzt werden, die mindestens eine Temperatur aufweisen, die der Zersetzungstemperatur der Plastifizierstoffe entspricht, die Brennhilfsmittel und die grünen Formteile innerhalb von 5 bis 60 Minuten auf Brenntemperatur erhitzt und für 5 bis 60 Minuten auf dieser Temperatur gehalten werden, anschließend die Brennhilfsmittel und die gebrannten Formteile innerhalb von 5 bis 60 Minuten auf die Ausgangstemperatur abgekühlt und die Formteile bei dieser Temperatur von den Brennhilfsmitteln abgenommen werden.

Eine Vorrichtung zur Durchführung des Verfahrens besteht aus einem drehbar angeordneten, kreisförmigen Ofenbett mit Haube, die Heizeinrichtungen aufweist. Auf dem Ofenbett sind Brennhilfsmittel angeordnet und die Haube weist eine Öffnung zum Be- und Entladen der Brennhilfsmittel auf und ist mit Wänden versehen, die seitlich über das Ofenbett greifen. Das Ofenbett und die Haube können auf einer gemeinsamen Tragsäule und die Haube auf dieser axial verschiebbar angeordnet sein.

Die durch die Erfindung erreichten Vorteile sind im wesentlichen darin zu sehen, daß der Heizzyklus, d. h. die Zeit zwischen Be- und Entladen der Brennvorrichtung weniger als drei Stunden beträgt. Die Brennhilfsmittel werden geschont, da sie nicht mehr auf Raumtemperatur, sondern nur noch auf Temperaturen oberhalb der Gefügeumwandlungstemperaturgrenzen, höchstens jedoch nur noch auf die Zersetzungstemperatur der Plastifizierstoffe abgekühlt werden müssen. Die Qualitätslenkung für die gebrannten Teile wird verbessert.

Im folgenden wird die Erfindung anhand einer schematischen Darstellung der Vorrichtung zum Brennen der Formteile, die lediglich als beispielsweise Ausführung zu betrachten ist, näher erläutert. Es zeigt

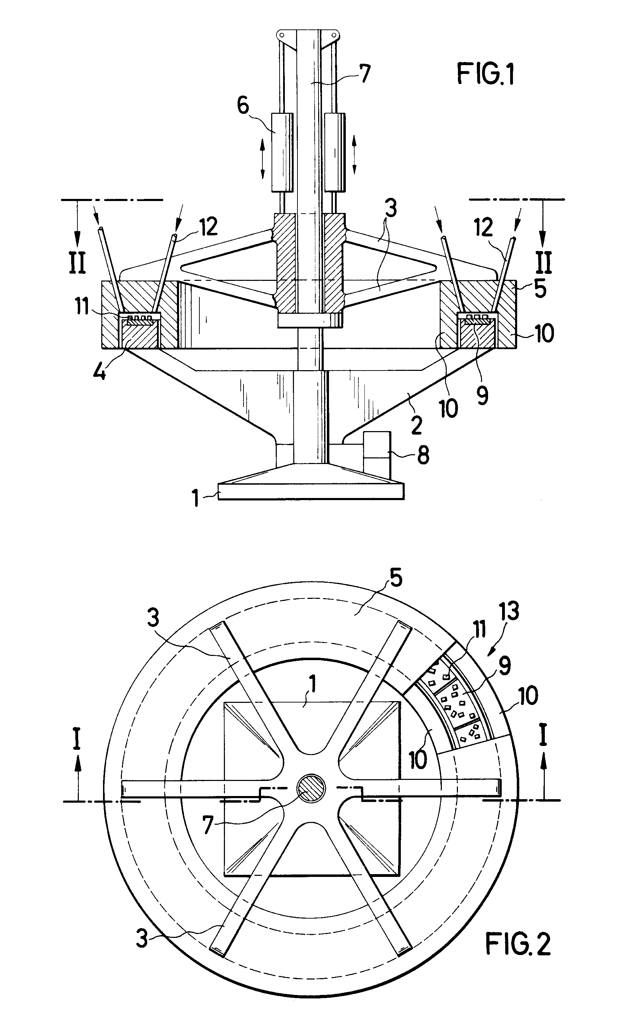

Figur 1 den Schnitt I - I von Figur 2 und

Figur 2 den Schnitt II-II von Figur 1

Auf einer gemeinsamen Tragsäule 7 ist das drehbar angeordnete, kreisförmige Ofenbett 4 mit Haube 5 angeordnet. Das Traggestell 2 für das Ofenbett 4 stützt sich auf einem Fuß 1 ab und wird durch einen Motor 8 angetrieben. Das Ofenbett kann aus einem thermisch isolierenden Material bestehen und eine Nut aufweisen, in der die Brennhilfsmittel (Brennplatten) 9 angeordnet sind. Die Brennhilfsmittel 9 dienen als Unterlage für die Formteile 11. Die Haube 5 hängt am Traggestell 3, das längs der Trägersäule 7 beweglich angeordnet sein kann. Die Hin- und Herbewegung kann mittels einer Hebeeinrichtung 6 hervorgerufen werden, die an der Tragsäule 7 befestigt ist. Die Haube, ebenfalls aus thermisch isolierendem Material, ist mit seitlichen Wänden 10, Heizeinrichtungen 12 und einer Öffnung 13 zum Be- und Entladen der Brennhilfsmittel 9 versehen. Ferner sind in der Haube die üblichen Meßeinrichtungen angeordnet, die zum Regeln derTemperatur und der Ofenbettbewegung erforderlich sind (nicht dargestellt). Die Ofentemperatur wird so geregelt, daß die Brennhilfsmittel die Zersetzungstemperatur der Plastifizierstoffe nicht unterschreiten.

## Patentansprüche

1. Verfahren zum Brennen von grünen Formteilen aus keramischen Massen, die Plastifizierstoffe enthalten, dadurch gekennzeichnet, daß die grünen Formteile auf Brennhilfsmittel gesetzt werden, die mindestens eine Temperatur aufweisen, die der Zersetzungstemperatur der Plastifizierstoffe entspricht, die Brennhilfsmittel und die grünen Formteile innerhalb von 5 bis 60 Minuten auf Brenntemperatur erhitzt und für 5 bis 60 Minuten auf dieser Temperatur gehalten werden, anschließend die Brennhilfsmittel und die gebrannten Formteile innerhalb von 5 bis 60 Minuten auf die Ausgangstemperatur abgekühlt und die Formteile bei dieser Temperatur von den Brennhilfsmitteln abgenommen werden.

2. Vorrichtung zur Durchführung des Verfahrens nach Anspruch 1, bestehend aus einem drehbar angeordneten, kreisförmigen Ofenbett mit Haube, die Heizeinrichtungen aufweist, dadurch gekennzeichnet, daß auf dem Ofenbett (4) Brennhilfsmittel (9) angeordnet sind und die Haube (5) eine Öffnung (13) zum Be- und Entladen der Brennhilfsmittel (9) aufweist und mit Wänden (10) versehen ist, die seitlich über das Ofenbett (4) greifen.

3. Vorrichtung nach Anspruch 2, dadurch gekennzeichnet, daß das Ofenbett (4) und die Haube (5) auf einer gemeinsamen Tragsäule (7) angeordnet sind.

4. Vorrichtung nach Anspruch 3, dadurch gekennzeichnet, daß die Haube (5) auf der Tragsäule (7) axial verschiebbar angeordnet ist.

## Claims

1. A process for firing green moldings of ceramic pastes which contain plasticizers, wherein the green moldings are placed on kiln furniture which has at least a temperature corresponding to the decomposition temperature of the plasticizers, the kiln furniture and the green moldings are heated within 5 to 60 minutes to firing temperature and kept for 5 to 60 minutes at this temperature, the kiln furniture and the fired moldings are then cooled within 5 to 60 minutes to the original temperature and the moldings are removed from the kiln furniture at this temperature.

2. An apparatus for carrying out the process as claimed in claim 1, comprising a rotatably arranged circular kiln bed with a hood having heating devices, wherein there is arranged on the kiln bed (4) kiln furniture (9) and the hood (5) has an opening (13) for loading and unloading the kiln furniture (9) and is provided with walls (10) which engage laterally over the kiln bed (4).

3. The apparatus as claimed in claim 2, wherein the kiln bed (4) and the hood (5) are arranged on a common bearing pillar (7).

4. The apparatus as claimed in claim 3, wherein the hood (5) is arranged in an axially displaceable manner on the bearing column (7).

## Revendications

1. Procédé pour la cuisson de corps moulés verts formés de masses céramiques, qui contiennent des substances plastifiantes, caractérisé en ce qu'on dispose les corps moulés verts sur des moyens auxiliaires de cuisson, qui possèdent au moins une température qui correspond à température de dissociation des substances plastifiées, qu'on échauffe les moyens auxiliaires de cuisson et les corps moulés verts en l'espace de 5 à 60 minutes à la température de cuisson et qu'on les maintient à cette température pendant 5 à 60 minutes, puis qu'on refroidit les moyens auxiliaires de cuisson et les corps moulés cuits en l'espace de 5 à 60 minutes, à la température initiale et qu'à cette température, on retire les corps moulés des moyens auxiliaires de cuisson.

2. Dispositif pour la mise en oeuvre du procédé selon la revendication 1, constitué par un lit circulaire de four, monté rotatif et comportant une hotte, qui contient des dispositifs de chauffage, caractérisé en ce que des moyens auxiliaires de cuisson (9) sont disposés sur le lit (4) du four et que la hotte (5) possède une ouverture (13) pour le chargement et le déchargement des moyens auxiliaires de cuisson (9) et est équipée de parois (10), qui s'engagent latéralement par-dessus le lit (4) du four.

3. Dispositif suivant la revendication 2, caractérisé par le fait que le lit (4) du four et la hotte (5) sont disposés sur une colonne de support commune (7).

4. Dispositif selon la revendication 3, caractérisé en ce que la hotte (5) est disposée sur la colonne de support (7) de manière à être déplaçable axialement.

FIG.1

FIG.2